# EUROPÄISCHE PATENTSCHRIFT

(11) **EP 3 215 699 B1**
(45) Veröffentlichungstag und Bekanntmachung des Hinweises auf die Patenterteilung: **19.02.2020**
(21) Anmeldenummer: 16820291.9
(22) Anmeldetag: 23.12.2016
(51) Int. Cl.: E06B 3/673, E06B 3/663

(54) **VERFAHREN ZUM BILDEN EINES GESCHLOSSENEN RAHMENFÖRMIGEN ABSTANDHALTERS FÜR EINE ISOLIERGLASSCHEIBE**
METHOD FOR FORMING A CLOSED FRAME-SHAPED SPACER FOR AN INSULATING GLASS PANE
PROCÉDÉ PERMETTANT DE FORMER UN ÉCARTEUR EN FORME DE CADRE FERMÉ POUR UNE VITRE ISOLANTE

(30) Priorität: 29.12.2015 DE 102015122882
(43) Veröffentlichungstag der Anmeldung: 13.09.2017
(73) Patentinhaber: Bystronic Lenhardt GmbH, 75242 Neuhausen-Hamberg (DE)
(72) Erfinder: SCHULER, Peter, 75233 Tiefenbronn (DE)
(74) Vertreter: Twelmeier Mommer & Partner
(86) Internationale Anmeldenummer: PCT/EP2016/082635
(87) Internationale Veröffentlichungsnummer: WO 2017/114795

(56) Entgegenhaltungen:
- WO-A1-2015/113080
- WO-A1-2016/062601
- DE-A1- 4 433 749

## Beschreibung

Ausgangspunkt der Erfindung ist ein Verfahren zum Bilden eines geschlossenen rahmenförmigen Abstandhalters für eine Isolierglasscheibe durch Auftragen eines zunächst pastösen und sich hernach verfestigenden Strangs, welcher durch eine Unterseite, eine Oberseite und zwei Seitenflächen begrenzt ist und eine Solldicke zwischen der Unterseite und der Oberseite sowie eine Sollbreite zwischen den beiden Seitenflächen hat, auf eine Glastafel entlang des Randes der Glastafel in der Weise, dass an einem Anfang des Strangs dessen Dicke auf einer Strecke mit einer vorgegebenen Länge eine Rampe aufweist, in welcher die Dicke des Strangs von Null auf die Solldicke ansteigt. An einem Ende des Strangs nimmt dessen Dicke komplementär zu der ansteigenden Rampe auf derselben Strecke, die Rampe überlappend, von der Solldicke auf Null ab, so dass die Oberfläche der Rampe eine Grenzfläche zwischen dem Anfang und dem Ende des Strangs bildet. Ein solches Verfahren ist aus der DE 44 33 749 C2 bekannt.

Als Unterseite wird hier jene Seite des Strangs bezeichnet, mit welcher dieser die Glastafel berührt. Als Oberseite wird die der Unterseite abgewandte Seite des Strangs bezeichnet. Die beiden Seitenflächen verbinden die Oberseite und die Unterseite miteinander.

Bei dem bekannten Verfahren wird zur Bildung eines thermoplastischen Abstandhalters ein Strang von zunächst pastöser Beschaffenheit mit einer über der Raumtemperatur liegenden Temperatur mittels einer Düse derart extrudiert und auf die Glastafel abgelegt, dass Anfang und Ende des Strangs nicht stumpf, sondern über eine Schrägfläche (Rampe) zusammenstoßen, die dadurch gebildet wird, dass die Dicke des Strangs beim Austreten aus der Düse am Anfang auf einer Strecke mit vorbestimmter Länge von Null auf die Solldicke des Strangs gesteigert und komplementär dazu am Ende des Strangs auf derselben Strecke von der Solldicke auf Null verringert wird. Das kann mit Hilfe einer Düse erreicht werden, deren Austrittsquerschnitt veränderlich ist und die auch, während sie in einem vorgegebenen Abstand zum Rand der Glastafel entlang des Randes der Glastafel bewegt wird, von der Glastafel abgehoben werden kann. Unvermeidlich ergibt sich bei dieser Arbeitsweise eine Fuge zwischen dem Anfang und dem Ende des Strangs. Diese Fuge wird beim Zusammenbau der Isolierglasscheibe unter Druck gesetzt, weil es zwingend erforderlich und üblich ist, Isolierglasscheiben zu verpressen, einerseits um die gewünschte Solldicke der Isolierglasscheibe zu erreichen, und andererseits, um eine feste und gegen Wasserdampfdiffusion dichte Verbindung zwischen dem Abstandhalter und den anliegenden Glastafeln zu gewährleisten. Bei diesem Verpressen werden zwangsläufig auch die beiden Schrägflächen am Anfang und am Ende des pastösen Strangs gegeneinander gepresst und ohne weitere Maßnahme dicht miteinander verbunden, so dass der rahmenförmige Abstandhalter den Innenraum der Isolierglasscheibe, wie gewünscht, hermetisch abschließt. Durch Abkühlen verfestigt sich der zunächst pastöse Strang und bildet den gewünschten Abstandhalter.

In der fertigen Isolierglasscheibe ist die Lage der Stoßstelle zwischen dem Anfang und dem Ende des Strangs auf der dem Innenraum der Isolierglasscheibe zugewandten Seitenfläche des Strangs noch als eine sich schräg über diese Seitenfläche verlaufende Linie erkennbar. Das wird von manchen Leuten als störend empfunden. Die auf jener Seitenfläche des Strangs, welche nach dem Zusammenbau der Isolierglasscheiben deren Innenraum begrenzt, erkennbare Linie markiert den in dieser Seitenfläche liegenden Abschnitt des Randes der Grenzfläche zwischen dem Anfang und dem Ende des Strangs.

Die nicht vorveröffentlichte WO 2016/062601 A1 offenbart ein Verfahren, mit welchem wenigstens jene Seitenfläche des pastösen Strangs, welche nach dem Zusammenbau der Isolierglasscheibe deren Innenraum begrenzt, in einem Bereich, welcher sich zu beiden Seiten des Randes der Grenzfläche zwischen dem Anfang und dem Ende des Strangs erstreckt, mit mechanischen Schwingungen beaufschlagt wird, insbesondere mittels Schwingkörpern, welche drucklos an der Seitenfläche des Strangs anliegen.

Die WO 2015/113080 A1 offenbart ein Verfahren zum Herstellen von Abstandhaltern für Isolierglasscheiben, in welchem als Abstandhalter ein Strang aus thermoplastischem Material auf eine Glasscheibe aufgebracht wird und in welchem Anfang und Ende des Strangs miteinander verbunden werden, indem die einander überlappenden Enden des Strangs zwischen einem Innenbacken und einem Außenbacken verpresst werden. Während der Innenbacken und der Außenbacken dem Strang anliegen, wird zwischen ihnen im Bereich der auf diese Weise gebildeten Verbindungsstelle zwischen Anfang und Ende des Strangs eine Vertiefung hergestellt, durch welche beim späteren Verpressen der Isolierglasscheibe auf ihre Solldicke ein Druckausgleich ermöglicht werden soll. Die Vertiefung für den Druckausgleich ist nach dem Verpressen der Isolierglasscheibe auf ihre Solldicke noch sichtbar. Eine Nachbehandlung dieser Stelle mit mechanischen Schwingungen, wie sie die WO 2016/062601 A1 lehrt, ist jedoch nicht möglich, weil die sichtbare Stelle in der bereits zusammengebauten Isolierglasscheibe liegt.

Der vorliegenden Erfindung liegt die Aufgabe zugrunde, einen Weg aufzuzeigen, wie ein Abstandhalter der eingangs genannten Art hergestellt werden kann, in welchem die Lage der Stoßstelle zwischen dem Anfang und dem Ende des Strangs in der fertigen Isolierglasscheibe weniger leicht zu erkennen ist als bisher.

Diese Aufgabe wird durch das Verfahren mit den im Patentanspruch 1 angegebenen Merkmalen gelöst. Ausgestaltungen und Weiterbildungen des erfindungsgemäßen Verfahrens sind Gegenstand der Unteransprüche.

Erfindungsgemäß wird ein pastöser Strang, welcher nach dem in der DE 44 33 748 C2 offenbarten Verfahren zur Bildung eines Abstandhalters auf eine Glastafel aufgetragen wurde, nachbehandelt, indem er in einem Bereich, welcher sich zu beiden Seiten des Randes der Grenzfläche zwischen dem Anfang und dem Ende des Stranges erstreckt, zwischen einem ersten Backen und einem zweiten Backen durch diese nur mit Druck beaufschlagt wird, wobei wenigstens die den Druck auf die erste Seitenfläche des Strangs, welche nach dem Zusammenbau der Isolierglasscheibe deren Innenraum begrenzt, ausübende Oberfläche des ersten Backens eine Beschaffenheit hat, aufgrund welcher das Material des Strangs, welches mit der Oberfläche des ersten Backens in Berührung kommt, sich von dieser durch Abheben des ersten Backens vom Strang wieder ablösen lässt. Anders als in der WO 2016/062601 A1 offenbart, wird der Strang nicht durch Beaufschlagen mit mechanischen Schwingungen nachbehandelt, vielmehr werden Druckbacken, welche den Seitenflächen des Strangs zugewandt sind, nur noch einander angenähert, um Druck auf den Strang auszuüben, aber im Gegensatz zur Lehre der WO 2016/062601 A1 werden die Druckbacken nicht in Schwingungen versetzt. Durch das Beaufschlagen mit Druck kann in der Seitenfläche des Strangs, welche nach dem Zusammenbau der Isolierglasscheibe deren Innenraum begrenzt, der Übergang zwischen dem Anfang und dem Ende des Strangs so vergleichmäßigt werden, dass die Lage der Grenzfläche zwischen dem Anfang und dem Ende des Strangs in jener Seitenfläche, welche nach dem Zusammenbau der Isolierglasscheibe deren Innenraum begrenzt, in der fertigen Isolierglasscheibe nicht mehr oder nicht mehr so deutlich wie im Stand der Technik zu erkennen ist. Das ist möglich, weil die Isolierglasscheibe beim Durchführen des erfindungsgemäßen Verfahrens noch nicht zusammengebaut ist. Dabei spielt es keine Rolle, ob die Grenzfläche zwischen dem Anfang und dem Ende des Strangs an der in der Isolierglasscheibe nach außen gewandten, zweiten Seitenfläche des Strangs und an der Oberseite und an der Unterseite des Strangs, welche in der Isolierglasscheibe an den beiden Glastafeln haften, noch erkennbar wäre, denn diese drei Seiten sind nach dem Zusammenbauen und Versiegeln der Isolierglasscheibe und/oder nach dem Einbau der Isolierglasscheibe in einen Fensterrahmen oder Türrahmen nicht mehr sichtbar.

Das erfindungsgemäße Verfahren kann in einer Fertigungslinie für Isolierglasscheiben durchgeführt werden, nachdem der pastöse Strang auf eine erste Glastafel aufgetragen wurde und bevor zum Vervollständigen der Isolierglasscheibe eine zweite Glastafel an den so gebildeten rahmenförmigen Strang angedrückt wird. In dieser Phase des Zusammenbaus der Isolierglasscheibe ist der Strang noch an drei Seiten frei zugänglich, nämlich an der ersten Seitenfläche, welche nach dem Zusammenbau der Isolierglasscheibe deren Innenraum begrenzt, an der ihr abgewandten, zweiten Seitenfläche und an der Oberseite des auf die erste Glastafel aufgetragenen Strangs, welche später mit der zweiten Glastafel verbunden wird.

In der Fertigungslinie für Isolierglasscheiben kann die erste Glastafel mit dem daran haftenden rahmenförmigen Strang aus dem Arbeitsbereich der Düse, mit welcher der Strang extrudiert und auf die Glastafel aufgetragen wurde, herausbewegt werden in eine Station, in welcher ein Werkzeug zum Nachbehandeln der Stoßstelle im rahmenförmigen Strang vorgesehen ist. Die für das Nachbehandeln der Stoßstelle aufgewendete Zeit kann kürzer sein als die Zeit, die für das Extrudieren und Auftragen des Strangs auf die Glastafel benötigt wird, so dass die Taktzeit der Fertigungslinie für die Herstellung der Isolierglasscheibe durch die Nachbehandlung nicht verlängert wird. Grundsätzlich kann die Nachbehandlung aber auch in derselben Station der Isolierglas-Fertigungslinie erfolgen, in welcher der Strang extrudiert und auf die Glastafel aufgetragen wurde.

Der Druck kann auf unterschiedliche Weise auf die Seitenflächen des Strangs ausgeübt werden. In einer Ausgestaltung der Erfindung werden dazu Backen verwendet, die nicht nur den in den Seitenflächen des Strangs liegenden Abschnitt des Rands der Grenzfläche zwischen Anfang und Ende des Strangs ein Stück weit überdecken, sondern auch noch einen Bereich der Seitenflächen überdecken, welcher sich zu beiden Seiten des Randes der Grenzfläche erstreckt. Eine auf die Seitenflächen des Strangs einwirkende Oberfläche der Backen kann zu diesem Zweck die Gestalt eines Rechtecks haben, dessen Kantenlängen durch die Höhe des auf die Glastafel aufgetragenen Strangs und durch die in Längsrichtung des Strangs gemessene Länge der Rampe bestimmt sind, welche die Lage der Grenzfläche zwischen Anfang und Ende des Strangs markiert.

In einer anderen Ausgestaltung der Erfindung kann die Oberfläche der Backen, welche auf die Seitenflächen des Strangs einwirken sollen, die Gestalt einer Raute haben, welche lang genug ist, um den Rand der Grenzfläche in der betreffenden Seitenfläche des Strangs vollständig oder nahezu vollständig zu überdecken. In diesem Fall können die Backen so an die Seitenflächen des Strangs angelegt werden, dass die Raute im Wesentlichen durch die Oberseite und die Unterseite des Strangs sowie durch zwei zum Rand der Grenzfläche parallele Linien begrenzt wird und der Rand der Grenzfläche im Wesentlichen in der Raute liegt. Diese Ausgestaltung der Erfindung hat den Vorteil, dass der Bereich der Seitenfläche des Strangs, auf den mit Druck eingewirkt wird, minimiert werden kann.

In einer weiteren Ausgestaltung der Erfindung kann die auf die erste Seitenfläche des Strangs einwirkende Oberfläche des ersten Backens die Form einer Raute haben, während der auf die zweite Seitenfläche des Strangs einwirkende zweite Backen eine rechteckige Oberfläche hat.

In einem Bereich, welcher sich zu beiden Seiten der Grenzfläche zwischen dem Anfang und dem Ende des Strangs erstreckt, kann mit einem Stempel Druck auf die Oberseite des Strangs ausgeübt werden. Das geschieht vorzugsweise, bevor das erste Mal auf die Seitenflächen des Strangs Druck ausgeübt wird. Das Ausüben von Druck auf die Oberseite des Strangs hat den Vorteil, dass die zwischen den Seitenflächen des Strangs gemessene Dicke infolge der Einwirkung des Stempels etwas größer wird. Nach dem Abheben des Stempels von der Oberseite des Strangs kann durch das Einwirken der Backen auf die beiden Seitenflächen des Strangs deren Abstand auf das ursprüngliche Maß verkleinert werden. Die dabei auftretende Materialverdrängung zwischen den beiden Backen erleichtert und begünstigt das Glätten der Seitenflächen im Bereich der Grenzfläche zwischen dem Anfang und dem Ende des Strangs.

Der erste Backen wird vorzugsweise so an den Strang angelegt, dass er die Glastafel nicht berührt. Dadurch kann sichergestellt werden, dass der erste Backen auf der Glastafel keine Spuren hinterlässt, welche nach dem Zusammenbau der Isolierglasscheibe nicht mehr beseitigt werden könnten. Der zweite Backen darf die Glastafel berühren. Spuren, die er auf der Glastafel hinterlässt, sind in der fertigen und eingebauten Isolierglasscheibe ohnehin nicht sichtbar.

Bei den Backen soll die den Strang berührende Oberfläche aus einem Material bestehen oder mit einem Material beschichtet sein, an welchem der pastöse Strang nicht oder allenfalls so schwach haftet, dass die Backen nicht mehr als eine vernachlässigbare Menge des Materials des pastösen Strangs vom Strang abtragen und/oder aufnehmen können. Auf diese Weise lässt sich die Auffälligkeit der Stoßstelle zwischen Anfang und Ende des Strangs besonders stark verringern. Als Materialien, an welchen das Material des pastösen Strangs nicht oder nur schwach haftet, kommen z. B. Fluorpolymere, beispielsweise Polytetrafluorethylen (PTFE), Perfluoralkoxylalkan (PFA), Fluorethylenpropylen (FEP), ferner Polyetheretherketon (PEEK) und Polysiloxane in Frage.

Ein Anhaften des Materials, aus welchem der Strang gebildet wird, an den Backen kann nicht nur durch die Materialauswahl besonders klein gehalten werden, sondern auch dadurch, dass die Rauheit der den Strang berührenden Oberfläche der Backen in vorgegebenen Grenzen gehalten wird. So kann die den Strang berührende Oberfläche der Backen einen Mittenrauwert Ra nach DIN EN ISO 4287:2010 von z. B. 0,5 µm bis 2 µm, insbesondere von 1 µm bis 1,5 µm, haben. Dadurch lässt sich die Kontaktfläche zwischen der den Strang berührenden Oberfläche der Backen und dem Strang verringern und die Antihaftwirkung - auch in Kombination mit der oben erwähnten Materialauswahl - verbessern.

In einer Weiterbildung des Verfahrens können Backen verwendet werden, die aus einem Material bestehen oder mit einem Material beschichtet sind, dessen Wärmeleitfähigkeit nicht mehr als 0,3 Watt/(m·K) aufweist. Dadurch kann erreicht werden, dass die Nachbehandlung eines thermoplastischen Strangs im Bereich seiner Stoßstelle nicht zu einer so starken lokalen Abkühlung der betreffenden Seitenfläche des Strangs führt, welche deren Vergleichmäßigung erschweren könnte.

Vorzugsweise werden wenigstens diejenigen Oberflächen der Backen und des ggf. vorgesehenen Stempels, welche den Strang berühren sollen, beheizt. Das ist vor allem dann vorteilhaft, wenn der Strang aus einem thermoplastischen Material oder überwiegend aus einem thermoplastischen Material besteht. Das Beheizen hat den Vorteil, dass die Temperatur und mit ihr die Viskosität des Strangs vor allem an dessen zu glättender Oberfläche in einem Bereich gehalten werden können, in welchem das Material des Strangs durch die Backen gut formbar ist. Die Oberflächen der Backen und ggf. des Stempels können auf jene Temperatur erwärmt werden, mit welcher der pastöse Strang auf die Glastafel aufgetragen wurde. In diesem Zustand ist der pastöse Strang für Zwecke der Erfindung gut formbar. Zu diesem Zweck können die zu beheizenden Oberflächen der Backen und ggf. des Stempels auf eine Temperatur im Bereich von 80° C bis 130° C, insbesondere auf eine Temperatur von 120° C bis 130° C erwärmt werden. Dieser Temperaturbereich eignet sich besonders für den Fall, dass für den pastösen und sich nachher verfestigenden Strang ein Material auf der Grundlage eines Polyisobutylens verwendet wird, bei welchem es sich um ein Thermoplast handelt.

Sollte der Strang eine abbindende Komponente enthalten, bei welcher das Abbinden durch das Erwärmen nicht beschleunigt wird, dann kann auch in diesem Fall das Beheizen der Backen und ggf. des Stempels vorteilhaft sein. In Fällen, in denen der Strang eine wärmehärtbare Komponente enthält, empfiehlt es sich, die erfindungsgemäße Nachbehandlung so früh wie möglich durchzuführen, solange der Strang noch hinreichend pastös ist.

Die Backen sollen mit einem Druck an die Seitenflächen des pastösen Strangs angelegt werden, der so gering ist, dass der erste Backen auf der später den Innenraum der Isolierglasscheibe begrenzenden Seitenfläche keine Delle hinterlässt, welche mit bloßen Auge sichtbar wäre. Besonders vorteilhaft ist es, wenn der Druck so hoch gewählt wird, dass der erste Backen gerade noch keine sichtbare Delle auf der ersten Seitenfläche des Strangs hinterlässt. Mit welchem Druck das erreichbar ist, hängt von der Art und Temperatur des für den Strang verwendeten Materials ab. Das Optimum kann durch Ausprobieren ermittelt werden.

Ob durch das Einwirken der Backen auf den Strang eine bleibende Delle in diesem entsteht und auch beim Abheben der Backen vom Strang Material des Strangs auf den Backen zurück bleibt, hängt nicht nur vom Druck ab, mit welchem die Backen auf den Strang einwirken, sondern auch von der Dauer der Einwirkung. Deshalb werden der Druck, mit welchem die Backen auf den Strang einwirken, und die Dauer der Einwirkung so aufeinander abgestimmt, dass sich wenigstens der erste Backen rückstandsfrei und ohne eine mit bloßem Auge sichtbare Delle auf der ersten Seitenfläche des Strangs zu hinterlassen von dem Strang lösen lässt. Der Druck, mit welchem der ggfs. vorgesehene Stempel auf die Oberseite des Strangs einwirkt, kann auch dadurch begrenzt werden, dass der kleinste Abstand von der Glastafel, den der Stempel einnehmen kann, voreingestellt wird. Ebenso kann der kleinste Abstand der beiden Backen voneinander auf die Solldicke oder annähernd auf die Solldicke des Strangs voreingestellt werden.

Die Backen können Bestandteile eines Greifers sein. Der erste Backen wird an die erste Seitenfläche des pastösen Strangs angelegt, an welcher die Trennlinie zwischen Anfang und Ende des Strangs als Ergebnis der Nachbehandlung mit bloßem Auge nicht mehr oder nicht mehr so deutlich sichtbar sein soll. Der zweite Backen kann auf die Glastafel aufgesetzt und an die zweite Seitenfläche des Strangs angelegt werden, welche später in der Isolierglasscheibe nach außen weist. Der Greifer kann eine Schließstellung haben, in welcher die beiden Backen einander parallel gegenüberliegen und einen Abstand haben, welcher gleich der Sollbreite des Strangs ist. Wird der geöffnete Greifer zuerst mit dem zweiten Backen auf die Glastafel aufgesetzt und an die später nach außen weisende Seitenfläche des Strangs angelegt und wird der Greifer erst dann durch Bewegen des ersten Backens bis auf die Sollbreite des Strangs geschlossen, dann kann man besonders einfach erreichen, dass sich die Lage des Strangs infolge der Nachbehandlung nicht ändert. Damit der erste Backen keine Spuren auf der Glastafel hinterlässt, kann sein der Glastafel zugewandter Rand geringfügig, z. B. Bruchteile eines Millimeters, gegenüber dem anderen, auf die Glastafel aufgesetzten zweiten Backen von der Oberfläche der Glastafel zurückspringen. Auf diese Weise kann die Glastafel als Referenz für die Einstellung der Lage des ersten Backens am pastösen Strang verwendet werden.

Üblicherweise hat der Strang bei unterschiedlichen Glastafeln - möglicherweise außer an deren Ecken - immer den gleichen Abstand vom Rand der Glastafel. Das macht es möglich, den Rand der Glastafel als Referenz für die Einstellung der Lage der Backen am Strang zu verwenden und, wenn die Backen Bestandteile eins Greifers sind, eine Voreinstellung für den zweiten Backen an der Lage des Randes der Glastafel zu orientieren.

Die Ränder der auf die Seitenflächen des Strangs einwirkenden Oberflächen der Backen und ggfs. des Stempels können abgerundet sein. Das ist günstig, um zu vermeiden, dass sie mit bloßem Auge sichtbare Abdrücke auf dem Strang, insbesondere auf der ersten Seitenfläche des Strangs, hinterlassen.

Die Oberfläche des erstens Backens, mittels welcher die erste Seitenfläche des Strangs mit Druck beaufschlagt wird, kann eine Kontur haben und hat vorzugsweise eine Kontur, welche der vorgegebenen Kontur der ersten Seitenfläche des Strangs angeglichen ist. Das fördert die Lösung der Aufgabe, in der ersten Seitenfläche des Strangs die Sichtbarkeit der Lage der Stoßstelle zwischen dem Anfang und dem Ende des Strangs zu verringern oder zu beseitigen. Vorzugsweise sind auch die Kontur der an den Strang anzulegenden Oberflächen des zweiten Backens und des wahlweise vorgesehenen Stempels der vorgegebenen Kontur der zweiten Seitenfläche des Strangs bzw. der vorgegebenen Kontur der Oberseite des Strangs angeglichen.

Die beiden Backen können zunächst so angeordnet werden, dass - bezogen auf die Längserstreckung des Strangs - die Mitte ihrer Oberflächen, mit welchen sie an die Seitenflächen des Strangs angelegt werden sollen, in der Mitte des Bereichs liegt, über welchen sich die Grenzfläche zwischen dem Anfang und dem Ende des Stranges erstreckt, und dass die Backen ein erstes Mal in dieser Anordnung mit Druck auf die beiden Seitenflächen des Strangs einwirken, dass danach die Backen vom Strang abgehoben und ein stückweit entlang des Strangs in die eine Richtung versetzt werden und in der durch das Versetzen erreichten Anordnung erneut mit Druck auf die Seitenflächen des Strangs einwirken,
dass danach die Backen entlang des Strangs in die entgegengesetzte Richtung ein stückweit über die Mitte des Bereichs hinaus, über welchen sich die Grenzfläche zwischen dem Anfang und dem Ende des Stranges erstreckt, versetzt werden und in der durch das zweite Versetzen erreichten Anordnung ein weiteres Mal auf die Seitenflächen des Strangs einwirken. Dabei wird der Versatz jedes Mal so gewählt, dass sich die Oberflächenbereiche des Strangs, auf welche die versetzten Backen einwirken, mit dem mittleren Bereich des Strangs, in welchem zuerst auf dessen Seitenflächen eingewirkt wurde, überlappen. Diese Vorgehensweise hat den Vorteil, dass - sollte trotz allem eine schwache Delle auf der ersten Seitenfläche des Strangs zurückbleiben - diese mit bloßem Auge weniger gut oder gar nicht mehr erkennbar ist. Um das zu erreichen, ist es besonders günstig, wenn das Einwirken auf die Seitenflächen des Strangs mit gegenüber der Mittellage versetzten Backen noch wenigstens ein weiteres Mal wiederholt wird, wobei die Größe des Versatzes gegenüber der anfänglichen Mittellage der Backen dann gleich dem vorhergehenden oder verschieden von dem vorhergehenden Versatz sein kann.

Es ist günstig, wenn die Dauer, während der auf die Seitenfläche des Strangs Druck ausgeübt wird, jeweils nicht länger als 1 Sekunde ist. Wenn wiederholt auf die Seitenflächen des Strangs Druck ausgeübt wird, ist es günstig, wenn bei den auf das erste Mal folgenden weiteren Malen die Dauer, während der Druck ausgeübt wird, kürzer ist als wenn der Druck zum ersten Mal auf die Seitenflächen des Strangs ausgeübt wird.

Die Erfindung eignet sich sowohl für die Herstellung von rechteckigen Isolierglasscheiben als auch für die Herstellung von Formscheiben. Formscheiben sind Isolierglasschreiben, deren Umriss von der Rechteckform abweicht. Beim Herstellen von Formscheiben kann so vorgegangen werden, dass die Stelle, an welcher Anfang und Ende des Strangs zusammenstoßen, in einem geradlinigen Abschnitt des Strangs liegt. Bei dieser Vorgehensweise lässt sich die Nachbearbeitung der Stoßstelle leichter durchführen als wenn sie in einem gekrümmten Abschnitt des Abstandhalters liegen würde. Das Nachbearbeiten kann aber auch durchgeführt werden, wenn die Stoßstelle an einer Ecke des rahmenförmig aufgetragenen Strangs liegt, wo sie sich sogar über die Ecke hinweg erstrecken kann. Das hat den Vorteil, dass sich die Stoßstelle an einer Stelle der Isolierglasscheibe befindet, an welcher sie weniger auffällt als an einem geradlinigen Abschnitt des Randes der Isolierglasscheibe.

Der weiteren Erläuterung der Erfindung dienen die beigefügten Zeichnungen.
- Figur 1: zeigt eine Düse, welche zum Auftragen eines pastösen Strangs auf eine Glastafel geeignet ist, die
- Figuren 2 - 5: zeigen die Düse in vier aufeinanderfolgenden Phasen des Auftragens eines pastösen Strangs auf die Glastafel,
- Figur 6: zeigt einen Teil der Glastafel mit einem aufgetragenen pastösen Strang in der Draufsicht,
- Figur 7: zeigt einen Querschnitt durch einen Teil der Glastafel mit einer Seitenansicht des pastösen Strangs im Bereich der Stoßstelle zwischen Anfang und Ende des Strangs,
- Figur 8: zeigt die Darstellung in Figur 7 ergänzt um den Umriss eines rechteckigen Backens,
- Figur 9: zeigt die Darstellung in Figur 7 ergänzt um den Umriss eines rautenförmigen Backens,
- Figur 10: zeigt einen Ausschnitt aus einer Fertigungslinie für Isolierglasscheiben in einer Schrägansicht mit einem Greifer, welcher die beiden Backen aufweist,
- Figur 11: zeigt einen Ausschnitt aus einer Fertigungslinie für Isolierglasscheiben wie in Figur 10, jedoch unter einem anderen Blickwinkel und mit dem Greifer in einer anderen Stellung an einer rechteckigen Glastafel,
- Figur 12: zeigt den Ausschnitt aus der Fertigungslinie wie in Figur 11, jedoch mit dem Greifer in einer Position am Rand einer dreieckigen Glastafel,
- Figur 13: zeigt den Ausschnitt aus der Fertigungslinie wie in Figur 11, jedoch mit dem Greifer in einer Position am Rand einer halbrunden Glastafel,
- Figur 14: zeigt einen vergrößerten Ausschnitt aus Figur 10 mit dem Greifer in seiner Offenstellung,
- Figur 15: zeigt einen vergrößerten Ausschnitt aus Figur 10 mit dem Greifer in seiner Geschlossenstellung, und
- Figur 16: zeigt einen Vertikalschnitt durch die Vorrichtung in Figur 15 gemäß Schnittlinie 16-16.

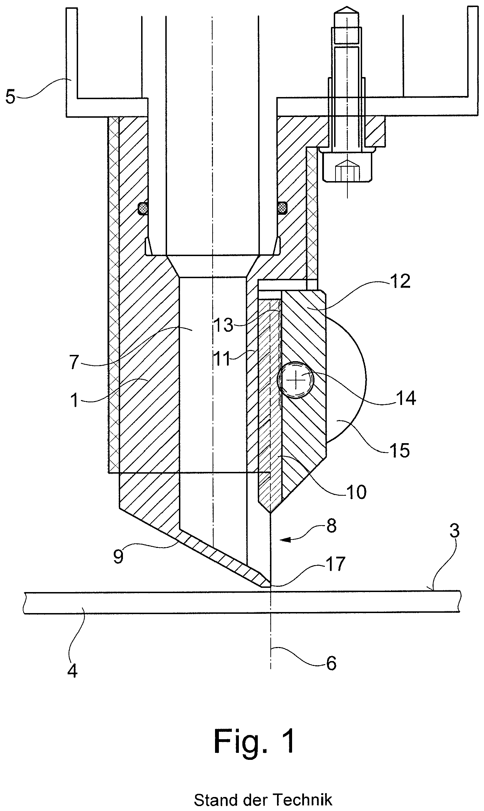

Die in den Figuren 1 bis 5 dargestellte Düse 1 zum Auftragen eines pastösen Strangs 2 auf eine Oberfläche 3 einer Glastafel 4 ist am Ende einer Welle 5 angebracht, welche um eine Drehachse 6, die senkrecht zur Oberfläche 3 der Glastafel 4 verläuft, drehbar ist. Die Welle 5 ist hohl ausgebildet und mündet in einen durch die Düse 1 hindurchführenden Kanal 7, welcher zu einer Austrittsöffnung 8 der Düse 1 führt. Die Düse 1 hat eine in ihrer Arbeitsstellung schräg zur Oberfläche 3 der Glastafel 4 verlaufende Endfläche 9 und begrenzt unmittelbar die senkrecht zur Oberfläche 3 der Glastafel 4 verlaufende Austrittsöffnung 8. Die Austrittsöffnung 8 hat einen im Wesentlichen rechteckigen Umriss. In der Mitte der Austrittsöffnung 8 verläuft die Drehachse 6 der Welle 5.

Die hohle Welle 5 dient zum Drehen der Düse 1 um ihre Drehachse 6 sowie zum Zuführen der auf die Glastafel 4 aufzutragenden pastösen Masse zur Düse 1. Zum Verschließen der Austrittsöffnung 8 ist ein Schieber 10 vorgesehen, welcher zwischen einer parallel zur Drehachse 6 verlaufenden Wand 11 des Kanals 7 und einem abnehmbaren Gegenhalter 12 auswechselbar angeordnet ist. Zwischen der Wand 11 und dem Gegenhalter 12 ist der Schieber 10 parallel zur Drehachse 6 verschiebbar geführt. Um ihn verschieben zu können, ist er mit einer Verzahnung 13 versehen, welche mit einem Ritzel 14 kämmt, welches durch einen an der Welle 5 angebrachten kleinen Elektromotor 15 kontrolliert antreibbar ist.

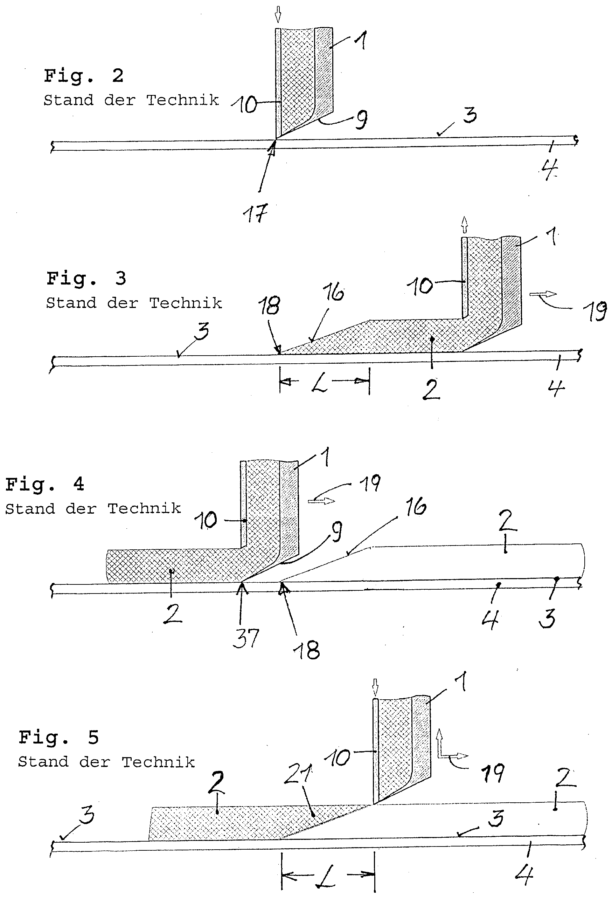

Um einen pastösen Strang auf die Oberfläche 3 der Glastafel 4 aufzutragen, wird die Düse 1 zunächst in Richtung der Drehachse 6 der Oberfläche 3 der Glastafel 4 angenähert, bis die Düse 1 die Oberfläche 3 der Glastafel 4 berührt oder fast berührt. Dabei ist die Austrittsöffnung 8 der Düse zunächst durch den Schieber 10 verschlossen. Diesen Zustand zeigt die Figur 2.

Die Düse 1 wird dann entlang des Randes der Glastafel 4 bewegt, wobei der Abstand der Düse 1 vom Rand der Glastafel 4 möglichst gleich bleiben sollte. Die Düse 1 kann dadurch am Rand der Glastafel 4 entlang bewegt werden, dass entweder bei ruhender Glastafel 4 die Düse 1 bewegt oder bei ruhender Düse 1 die Glastafel 4 bewegt wird, oder dadurch, dass sowohl die Düse 1 als auch die Glastafel 4 aufeinander abgestimmt bewegt werden. Die Bewegung der Düse 1 relativ zur Glastafel 4 erfolgt in einer der Austrittsöffnung 8 der Düse 1 entgegengesetzten Richtung.

In der Startphase der Bewegung über eine Strecke mit der Länge L (siehe Figur 3) wird der Schieber 10 stetig geöffnet, bis er eine vorgegebene Stellung erreicht, in welcher der aus der Düse 1 austretende Strang 2 seine Solldicke D hat. Durch das stetige Öffnen des Schiebers 10 erhält der Strang 2 in der Startphase auf der Strecke mit der Länge L eine stetig zunehmende Dicke, so dass die Oberseite des Strangs 2 dort durch eine Schrägfläche 16 gebildet ist, die dem ersten Abschnitt des Strangs 2 die Gestalt einer schräg aufsteigenden Rampe mit der Länge L verleiht.

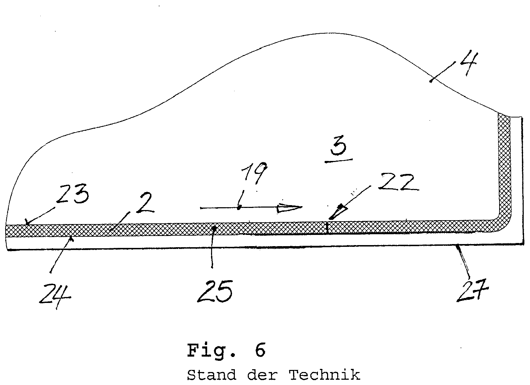

Die Düse 1 wird parallel zur Oberfläche 3 der Glastafel 4 an deren Rand entlang um die Glastafel 4 herumbewegt und legt dabei einen Strang 2 von im Wesentlichen gleichbleibendem Querschnitt und gleichbleibender Dicke D auf die Glastafel 4 ab, auf welcher der Strang 2 haftet. Schließlich nähert sich die Düse 1 wieder der Rampe 16, siehe Figur 6. Sie wird relativ zur Glastafel 4 unverändert weiterbewegt, bis sie schließlich mit ihrer Unterkante 17 die Spitze 18 des Anfangsabschnitts des Strangs 2 erreicht. Wegen des schrägen Verlaufs der unteren Endfläche 9 der Düse 1, deren Winkel etwas größer gewählt sein kann als der Winkel zwischen der Oberfläche 3 der Glastafel 4 und der Oberfläche der Rampe 16, kommt es nicht zu einer flächigen Berührung der unteren Endfläche 9 der Düse 1 mit der Rampe 16. Im weiteren Verlauf der Bewegung der Düse 1 relativ zur Glastafel 4 in Richtung des Pfeils 19 wird die Düse 1 kontrolliert so von der Glastafel 4 abgehoben, dass sich ihre Unterkante 17 an der Oberseite der Rampe 16 entlang bewegt. Gleichzeitig und synchron dazu wird der Schieber 10 stetig in Richtung seiner Schließstellung vorgeschoben; er erreicht seine Schließstellung, wenn die Unterkante 17 der Düse 1 das obere Ende 20 der Rampe 16 erreicht. Dieser Zustand ist in Figur 5 dargestellt.

Auf diese Weise wird ein keilförmiger Endabschnitt 21 des Strangs 2 gebildet, welcher komplementär zur Rampe 16 ausgebildet ist und auf der Rampe 16 liegt, so dass der Strang 2 einen geschlossenen Rahmen bildet, welcher auf der Glastafel 4 haftet, deren Rand außerhalb des Rahmens liegt.

Der keilförmige Endabschnitt 21 kann so auf die Rampe 16 aufgetragen werden, dass der Strang 2 dort gegenüber der Solldicke D des Strangs 2 etwas überhöht ist. Das erleichtert es, beim späteren Verpressen der Isolierglasscheibe eine besonders zuverlässige und dichte Verbindung zwischen der Rampe 16 und dem keilförmigen Endabschnitt 21 zu erhalten. Diese Überhöhung kann man einfach dadurch erzielen, dass man die Schließbewegung des Schiebers 10 beim Erreichen der Rampe 16 erst dann startet, nachdem die Unterkante 17 der Düse 1 die Spitze 18 des Anfangsabschnitts des Strangs 2 (den Beginn der Rampe 16) bereits um eine geringe Länge passiert hat, die klein ist verglichen mit der Länge L der Rampe 16.

Der Rand 22 der Grenzfläche zwischen dem Anfang und dem Ende des Strangs 2, d. h. zwischen der Rampe 16 und dem keilförmigen Endabschnitt 21 des Strangs 2, ist zunächst gut sichtbar. Diese Sichtbarkeit wird durch Anwendung der Erfindung gemindert oder ganz beseitigt.

Figur 6 zeigt einen Teil der Glastafel 4 mit einem darauf aufgetragenen Strang 2 in einer Draufsicht. Der auf der Glastafel 4 liegende Strang 2 verläuft parallel zum Rand 27 der Glastafel 24 und hat eine erste Seitenfläche 23, welche in der späteren Isolierglasscheibe dem Innenraum der Isolierglasscheibe zugewandt ist, und hat eine zweite Seitenfläche 24, welche nach außen weist. Die in Figur 6 dem Betrachter zugewandte Seite des Strangs 2 wird hier als seine Oberseite 25 bezeichnet, die auf der Glastafel 4 liegende Seite des Strangs 2 wird als seine Unterseite 26 bezeichnet. Der Rand 22 der Grenzfläche zwischen Anfang und Ende des Strangs 2 ist in Figur 6 als eine senkrecht zu den beiden Seitenflächen 23 und 24 verlaufende Linie zu sehen. Der Pfeil 19 zeigt die Längsrichtung des Strangs 2 an, in welcher sich die Düse 1 relativ zur Glastafel 4 bewegt hat.

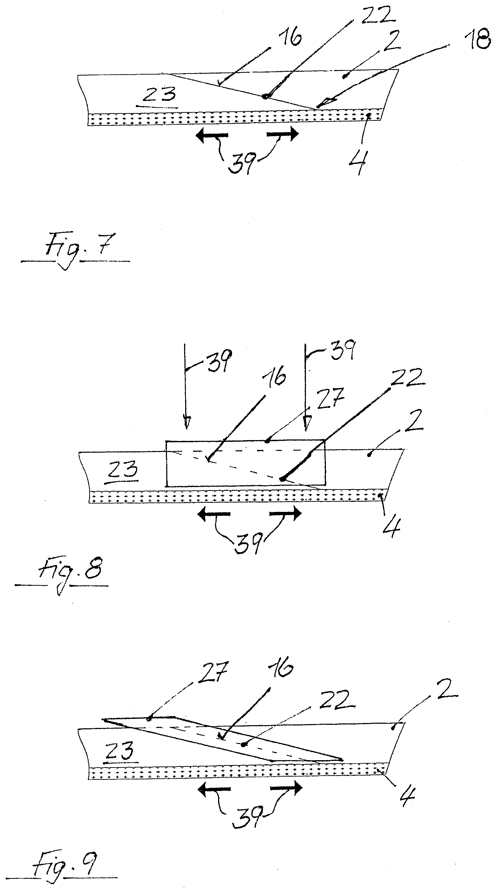

Figur 7 zeigt einen Querschnitt durch einen Teil der Glastafel 4 mit einer Ansicht der ersten Seitenfläche 23 des Strangs 2, auf welcher der schräg zur Oberfläche 3 der Glastafel 4 verlaufende Rand 22 der Grenzfläche zwischen der Rampe 16 und dem keilförmigen Endabschnitt 21 des Strangs 2 zu sehen ist. Um die Erkennbarkeit dieses Randes 22 zu vermindern oder zu beseitigen, wird auf diesen Rand 22 und einen zu beiden Seiten an den Rand 22 angrenzenden Bereich der ersten Seitenfläche 23 des Strangs mit einem Backen 35 eingewirkt, der den Rand 22 ganz oder teilweise überdeckend mindestens einmal, vorzugsweise wiederholt, an die Seitenfläche 23 gedrückt wird. Der Backen 35 kann der Seitenfläche 23 flächig anliegen und seine auf die Seitenfläche 23 einwirkende Oberfläche kann einen rechteckigen Umriss haben, wie in Figur 8 dargestellt, sie kann aber auch einen rautenförmigen Umriss haben, wie in Figur 9 dargestellt. Letzteres hat den Vorteil, dass die Kontaktfläche zwischen dem Backen 35 und der Seitenfläche 23 des Strangs 2 minimiert werden kann. In beiden Fällen kann vorgesehen sein, dass der Backen 35 einen geringen Abstand von der Oberfläche 3 der Glastafel 4 einhält, so dass er keine Spuren auf der Oberfläche 3 der Glastafel 4 hinterlassen kann.

Nur sicherheitshalber liegt dem Backen 35 ein zweiter Backen 36 gegenüber, welcher an die zweite Seitenfläche 24 des Strangs 2 angelegt wird und als Widerlager dient, welches verhindert, dass der erste Backen 35 den Strang 2 im Bereich der Verbindungsstelle zwischen dem Anfang und dem Ende des Strangs 2 aus seiner Soll-Lage nach außen in Richtung zum nahegelegenen Rand 27 der Glastafel 4 verschiebt.

Die auf den Strang 2 einwirkenden Oberflächen der beiden Backen 35 und 36 sollen eine Beschaffenheit haben, die es ermöglicht, dass sich die Backen 35 und 36 von dem Strang 2 lösen können, ohne dass nennenswerte Rückstände des bevorzugt thermoplastischen Materials, aus welchem der Strang 2 mindestens an seiner Oberfläche besteht, an den Backen 35 und 36 haften bleiben. Bei dem ersten Backen 35, welcher auf die erste Seitenfläche 23 des Strangs 2 einwirkt, welche in der fertigen Isolierglasscheibe innen liegt, wären Rückstände, die von der ersten Seitenfläche 23 des Strangs 2 stammen und dort mit bloßem Auge leicht erkennbare Spuren hinterlassen, nennenswert und deshalb unerwünscht. Auf der gegenüberliegenden Seitenfläche 24 des Strangs 2 sind die Anforderungen weniger streng, weil die Seitenfläche 24 in der fertigen und eingebauten Isolierglasscheibe nicht mehr sichtbar ist. Materialien, an welchen heiße thermoplastische Massen auf der Basis eines Polyisobutylens, welche für das Abdichten von Isolierglasscheiben gebräuchlich sind, nicht oder schlecht haften, sind z. B. Polytetrafluorethylen (PTFE), Perfluoralkoxylalkan (PFA), Fluorethylenpropylen (FEP), Polyetheretherketon (PEEK) und Polysiloxane.

Wenn sich der Strang 2 verfestigt hat, kann die Verbindungsstelle zwischen dem Anfang und dem Ende des Strangs 2 nicht mehr geglättet und dadurch die Verbindungsstelle unauffälliger gemacht werden oder mit bloßem Auge nicht mehr zu erkennen sein. Deshalb wird die Oberfläche der Backen vorzugsweise auf eine Temperatur beheizt, bei welcher sich das Material, aus welchem der Strang besteht, noch leicht plastisch formen lässt, bei einem Material auf der Basis eines Polyisobutylens z. B. auf eine Temperatur im Bereich von 80° C bis 130° C, insbesondere auf eine Temperatur von 120° C bis 130° C. Besonders geeignet ist eine Temperatur, mit welcher das Material, aus welchem der Strang 2 gebildet wird, zur Düse 1 gepumpt wird.

Vorzugsweise ist zusätzlich ein Stempel 38 vorgesehen, welcher in Richtung des Pfeils 37 auf die Oberseite des Strangs 2 drücken kann, bevor die beiden Backen 35 und 36 auf die Seitenflächen 23 und 24 drücken. Das hat den Vorteil, dass sich die beiden Seitenflächen 23 und 24 zunächst etwas ausbauchen können und dadurch an den Seitenflächen 23 und 24 überschüssiges Material vorhanden ist, welches verdrängt wird, wenn nach dem Abheben des Stempels 38 die beiden Backen 35 und 36 auf die Seitenflächen 23 und 24 des Strangs 2 drücken und sich bis auf die Sollbreite des Strangs 2 aneinander annähern. Der dabei auftretende Verdrängungsprozess verringert oder beseitigt die Sichtbarkeit der Verbindungsstelle zwischen Anfang und Ende des Strangs 2.

Besonders günstig ist eine Verfahrensweise mit folgenden Schritten:
Die beiden Backen 35, 36 können zunächst so angeordnet werden, dass - bezogen auf die Längserstreckung des Strangs 2 - die Mitte ihrer Oberflächen, mit welchen sie an die Seitenflächen 23, 24 des Strangs 2 angelegt werden sollen, in der Mitte des Bereichs liegt, über welchen sich die Grenzfläche 22 zwischen dem Anfang und dem Ende des Stranges 2 erstreckt, und dass die Backen 35, 36 ein erstes Mal in dieser Anordnung mit Druck auf die beiden Seitenflächen 23, 24 des Strangs 2 einwirken, nachdem zuvor der Stempel 38 auf die Oberseite 25 des Strangs 2 gedrückt hat,
dass danach die Backen 35, 36 vom Strang 2 abgehoben und ein stückweit entlang des Strangs 2 in die eine Richtung versetzt werden und in der durch das Versetzen erreichten Anordnung erneut mit Druck auf die Seitenflächen 23, 24 des Strangs 2 einwirken,
und dass danach die Backen 35, 36 entlang des Strangs 2 in die entgegengesetzte Richtung ein stückweit über die Mitte des Bereichs hinaus, über welchen sich die Grenzfläche zwischen dem Anfang und dem Ende des Stranges 2 erstreckt, versetzt werden und in der durch das zweite Versetzen erreichten Anordnung ein weiteres Mal auf die Seitenflächen 23, 24 des Strangs 2 einwirken. Dabei wird der Versatz jedes Mal so gewählt, dass sich die Oberflächenbereiche des Strangs 2, auf welche die versetzten Backen 35, 36 einwirken, mit dem mittleren Bereich des Strangs 2, in welchem zuerst auf dessen Seitenflächen 23, 24 eingewirkt wurde, überlappen. Diese Vorgehensweise hat den Vorteil, dass - sollte trotz allem eine schwache Delle auf der ersten Seitenfläche 23 des Strangs 2 zurückbleiben - diese mit bloßem Auge weniger gut oder gar nicht mehr erkennbar ist. Um das zu erreichen, ist es besonders günstig, wenn das Einwirken auf die Seitenflächen 23, 24 des Strangs 2 mit gegenüber der Mittellage versetzten Backen 35, 36 noch wenigstens ein weiteres Mal wiederholt wird, wobei die Größe des Versatzes gegenüber der anfänglichen Mittellage der Backen 35, 36 dann gleich dem vorhergehenden oder verschieden von dem vorhergehenden Versatz sein kann.

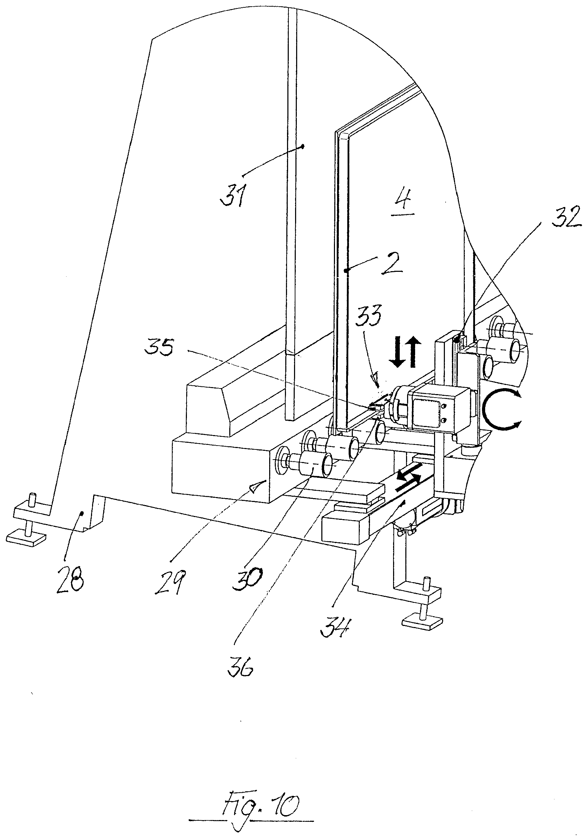

Figur 10 zeigt einen Ausschnitt aus einer Fertigungslinie für Isolierglasscheiben mit einem Gestell 28, welches einen Waagerechtförderer 29 mit einer Reihe von synchron antreibbaren Förderrollen 30 sowie eine Stützwand 31 trägt, an welcher sich auf den Förderrollen 30 stehende Glastafeln 4 abstützen können. In dem in Figur 10 dargestellten Beispiel sieht man eine Glastafel 4, auf welcher ein rahmenförmiger Abstandhalter angebracht ist, der - wie vorstehend beschrieben - aus einem pastösen Strang 2 gebildet ist. Dabei kann es sich um einen Strang 2 aus einem thermoplastischen Material handeln, z. B. auf der Grundlage eines Polyisobutylens. Am Gestell 28 ist eine sich parallel zur Stützwand 31 von unten nach oben erstreckende Schiene 32 angebracht, an welcher ein Greifer 33 auf und ab bewegbar, in seinem Abstand von der Stützwand 31 veränderbar und um eine senkrecht zur Stützwand 31 verlaufende Achse drehbar angebracht ist. Die Schiene 32 kann ortsfest am Gestell 28 angebracht sein, sie kann aber auch parallel zum Waagerechtförderer 29 verschiebbar an einer waagerechten Traverse 34 des Gestells 28 angebracht sein.

Der Greifer 33 hat ein Paar Backen 35 und 36, deren einander zugewandte Oberflächen parallel zueinander verlaufen können oder eine der Kontur der Seitenflächen 23 und 24 des Strangs 2 angepasste Kontur haben können und deren gegenseitiger Abstand zwischen einer Offenstellung und einer Schließstellung veränderbar ist. In der in Figur 10 dargestellten Schließstellung können die Backen 35 und 36 den beiden Seitenflächen 23 und 24 des Strangs 2 mit Druck anliegen. In der Offenstellung geben die Backen 35 und 36 den Strang 2 frei.

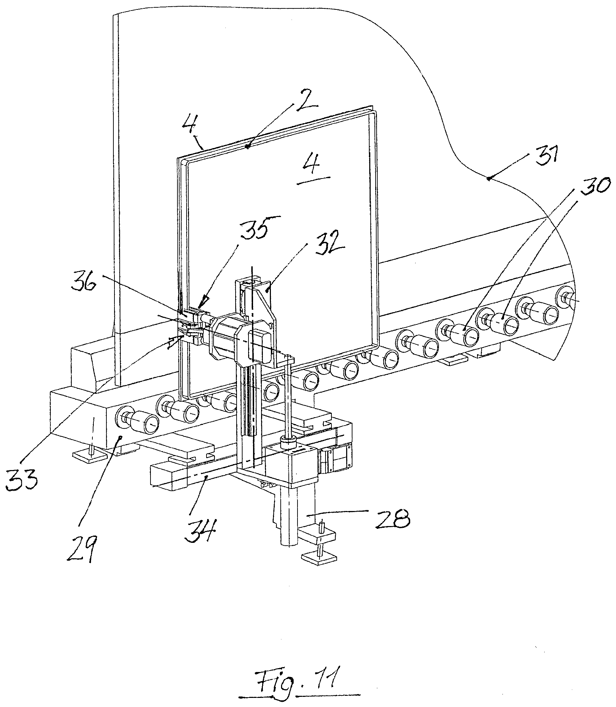

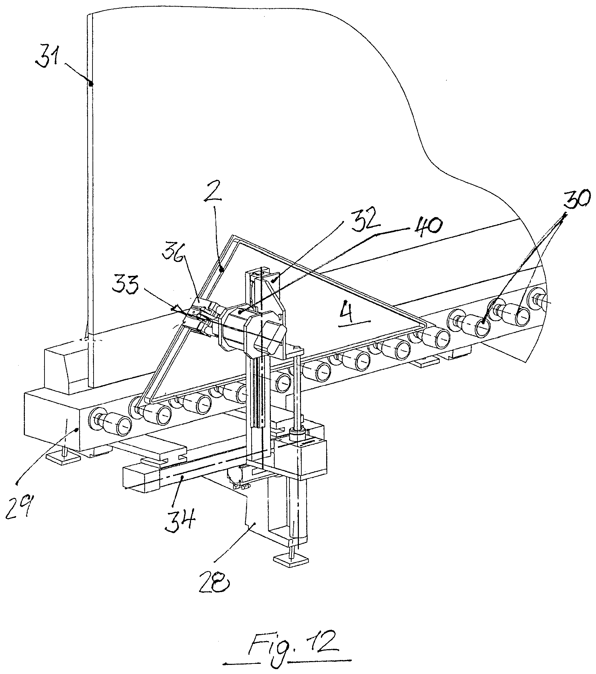

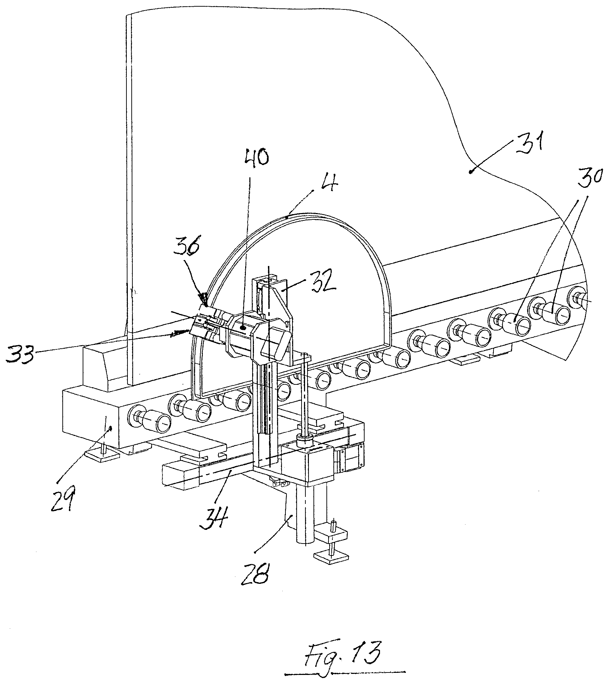

Die Glastafel 4 und der Greifer 33 werden relativ zueinander so positioniert, dass die Backen 35 und 36 des Greifers 33 an den Seitenflächen 23 und 24 des Strangs 2 jene Stelle überdecken, wo Anfang und Ende des Strangs 2 zusammentreffen. Bei einer rechteckigen Glastafel 4, wie in Figur 10 dargestellt, liegt diese Stelle zweckmäßigerweise immer am unteren waagerechten Rand der Glastafel, sie könnte aber auch, wie in Figur 11 dargestellt, an einem aufragenden Rand der Glastafel liegen, oder, wie in den Figuren 12 und 13 dargestellt, bei einer Glastafel 4 für die Herstellung einer Formscheibe mit einem von der Rechteckform abweichenden Umriss irgendwo an einem oberhalb des unteren Rands der Glastafel 4 liegenden Stelle des Randes der Glastafel 4 liegen. Die beschriebene Art der Anbringung des Greifers 33 am Gestell 22 mit der Möglichkeit, ihn auf und ab, vor und zurück sowie waagerecht hin und her zu bewegen und ihn um eine zur Stützwand 31 senkrechte Achse zu drehen, ermöglicht es, die Stoßstelle zwischen Anfang und Ende des Strangs 2 irgendwo zu platzieren und erfindungsgemäß nachzubehandeln.

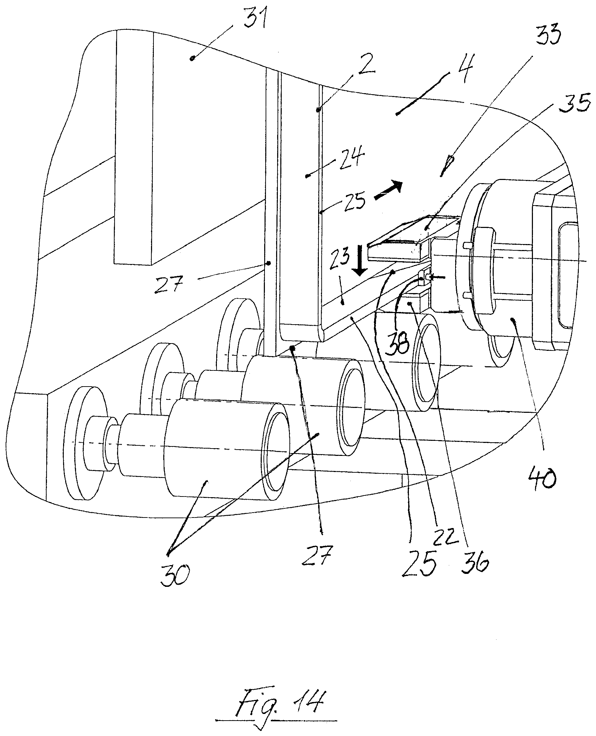

Figur 14 zeigt vergrößert einen Ausschnitt der in Figur 10 dargestellten Vorrichtung mit geöffnetem Greifer 33. Die Backen 35 und 36 liegen in der Offenstellung parallel zueinander und haben einen größeren Abstand als in der Schließstellung. Die Backen 35 und 36 befinden sich durch Vorschieben des Greifers 33 gegen die Glastafel 4 in einer Position, in welcher sie nur noch einander angenähert werden müssen. Der untere, zweite Backen 36 berührt die Oberfläche 3 der Glastafel 4, der obere, erste Backen 35 jedoch nicht. An die Oberseite 25 des Strangs 2 ist ein Stempel 38 angelegt worden, welcher zwischen den beiden Backen 35 und 36 aus dem Greiferkörper 40 vorgeschoben und dadurch zur Anlage an der Oberseite 25 des Strangs 2 gebracht wurde; er kann vor dem Schließen des Greifers 33 den Strang 2 stauchen und dadurch das Einwirken der Backen 35 und 36 auf die Seitenflächen 24 und 25 des Strangs 2 wirkungsvoller machen.

Durch Verringern des Abstands der beiden Backen 35 und 36 voneinander gelangen diese zur Anlage an den Seitenflächen 23 und 24 des Strangs 2 und überdecken dort den Rand 22 der zwischen Anfang und Ende des Strangs 2 liegenden Grenzfläche.

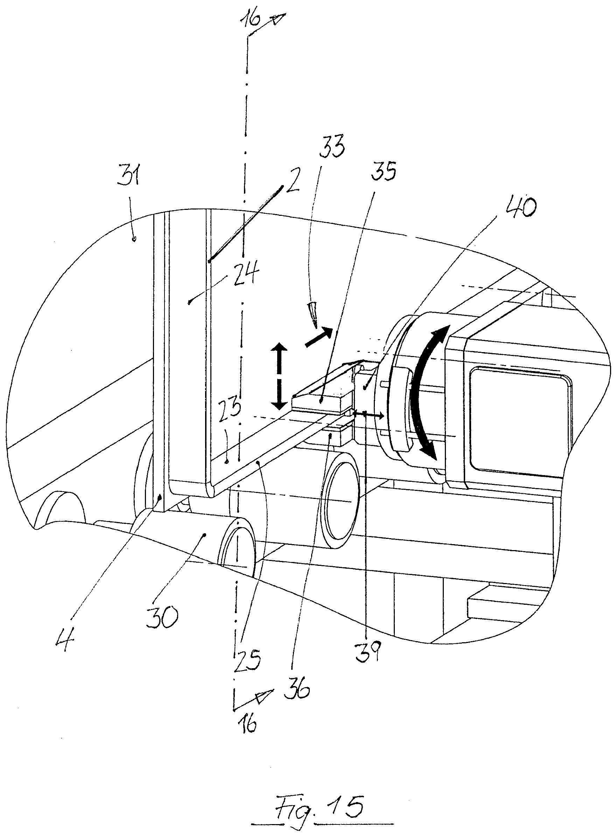

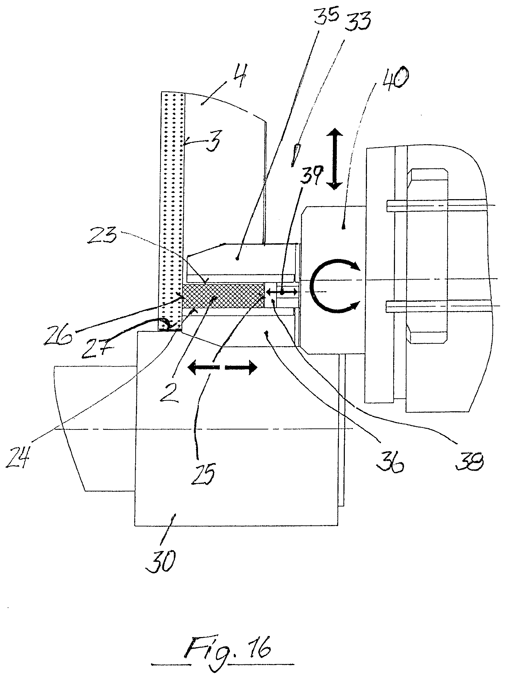

Die Schließstellung des Greifers 33 ist in den Figuren 15 und 16 dargestellt. Figur 16 zeigt deutlich, dass der untere Backen 36 die Glastafel 4 berühren kann, während der obere Backen 35 einen geringen Abstand von der Oberfläche 3 der Glastafel 4 einhält. Der Stempel 38 liegt zwischen den beiden Backen 35 und 36 und berührt die Oberseite 25 des Strangs 2, vorzugsweise bevor die beiden Backen 35 und 36 mit Druck auf die Seitenflächen 23 und 24 des Strangs 2 einwirken. Nach erfolgter Beaufschlagung des Strangs 2 mit Druck wird der Greifer 33 wieder geöffnet und von der Glastafel 4 zurückgezogen, so dass die Glastafel 4 mit dem daran haftenden, aus dem Strang 2 gebildeten rahmenförmigen Abstandhalter auf dem Waagerechtförderer 29 abgefördert werden kann, ohne dass der aufragende Abschnitt des Strangs 2 mit dem Greifer 33 kollidiert. Vorzugsweise wird die Glastafel aber erst dann abgefördert, nachdem die Backen 35 und 36 auf mehrere gegeneinander versetzte und einander überlappende Abschnitte eingewirkt haben. Dazu kann entweder der Greifer 33 relativ zur feststehenden Glastafel 4 oder die Glastafel 4 relativ zum feststehenden Greifer verschoben werden.

**Bezugszeichenliste**

| | | | |
|---|---|---|---|
| 1 | Düse | 29 | Waagerechtförderer |
| 2 | pastöser Strang | 30 | Förderrollen |
| 3 | Oberfläche von 4 | 31 | Stützwand |
| 4 | Glastafel | 32 | Schiene |
| 5 | hohle Welle | 33 | Greifer |
| 6 | Drehachse | 34 | Traverse |
| 7 | Kanal | 35 | Backen |
| 8 | Austrittsöffnung | 36 | Backen |
| 9 | Endfläche | 37 | Pfeil |
| 10 | Schieber | 38 | Stempel |
| 11 | Wand | 39 | Pfeile |
| 12 | Gegenhalter | 40 | Greiferkörper |
| 13 | Verzahnung | | |
| 14 | Ritzel | B | Sollbreite des Strangs 2 |
| 15 | Elektromotor | D | Solldicke des Strangs 2 |
| 16 | Schrägfläche, Rampe | L | Länge der Rampe 16 |
| 17 | Unterkante von 1 | | |
| 18 | Spitze des Anfangsabschnitts von 2 | | |
| 19 | Pfeil, zeigt die Bewegung der Düse in Längsrichtung des Strangs an | | |
| 20 | Oberes Ende von 16 | | |
| 21 | keilförmiger Endabschnitt von 2 | | |
| 22 | Rand der Grenzfläche zwischen 16 und 21 | | |
| 23 | erste Seitenfläche von 2 | | |
| 24 | zweite Seitenfläche von 2 | | |
| 25 | Oberseite | | |
| 26 | Unterseite | | |
| 27 | Rand der Glastafel 4 | | |
| 28 | Gestell | | |

## Patentansprüche

1. Verfahren zum Bilden eines geschlossenen rahmenförmigen Abstandhalters für eine Isolierglasscheibe durch
Auftragen eines pastösen und sich hernach verfestigenden Strangs (2), welcher durch eine Unterseite (26), eine Oberseite (25), eine erste Seitenfläche (23) und eine zweite Seitenflächen (24) begrenzt ist und eine Solldicke (D) zwischen der Unterseite (26) und der Oberseite (25) sowie eine Sollbreite (B) zwischen den beiden Seitenflächen (23, 24) hat,
auf eine Glastafel (4) entlang des Randes der Glastafel (4) in der Weise, dass an einem Anfang des Strangs (2) dessen Dicke auf einer Strecke mit der Länge (L) eine Rampe (16) aufweist, in welcher die Dicke des Strangs (2) von Null auf die Solldicke (D) ansteigt, und an einem Ende des Strangs (2) dessen Dicke komplementär zu der ansteigenden Rampe (16) auf derselben Strecke (L), die Rampe (16) überlappend, von der Solldicke (D) auf Null abnimmt, so dass die Oberfläche der Rampe (16) eine Grenzfläche zwischen dem Anfang und dem Ende des Strangs (2) bildet,
und Nachbehandeln des pastösen Strangs (2), indem dieser an seinen beiden Seitenflächen (23,24) in einem Bereich, welcher sich zu beiden Seiten des Randes (22) der Grenzfläche zwischen dem Anfang und dem Ende des Strangs (2) erstreckt, zwischen einem ersten Backen (35) und einem zweiten Backen (36) durch diese nur mit Druck beaufschlagt wird, wobei wenigstens die den Druck auf die erste Seitenfläche (23) des Strangs (2), welche nach dem Zusammenbau der Isolierglasscheibe deren Innenraum begrenzt, ausübende Oberfläche des ersten Backens (35) eine Beschaffenheit hat, aufgrund welcher das Material des Strangs (2), welches mit der Oberfläche des ersten Backens (35) in Berührung kommt, sich von dieser durch Abheben des ersten Backens (35) vom Strang (2) wieder ablösen lässt.

2. Verfahren nach Anspruch 1, **dadurch gekennzeichnet**, das die dem Strang (2) zugewandten Oberflächen der Backen (35,36) aus einem Fluorpolymer wie zum Beispiel Polytetrafluoräthylen (PTFE), Perfluoralkoxylalkan (PFA), Fluorethylenpropylen (FEP), aus einem Polysiloxan oder aus einem Polyetheretherketon (PEEK) bestehen.

3. Verfahren nach Anspruch 1 oder 2, **dadurch gekennzeichnet, dass** die den Strang (2) berührenden Oberflächen der Backen (35,36) einen Mittenrauwert Ra nach DIN EN ISO 4287:2010 von 0,5 µm bis 2 µm, insbesondere von 1 µm bis 1,5 µm haben.

4. Verfahren nach einem der vorstehenden Ansprüche, **dadurch gekennzeichnet, dass** der Druck, mit welchem die Backen (35,36) auf den Strang (2) einwirken, und die Dauer der Einwirkung so aufeinander abgestimmt sind, dass sich wenigstens der erste Backen (35) rückstandsfrei von dem Strang (2) lösen lässt.

5. Verfahren nach einem der vorstehenden Ansprüche, **dadurch gekennzeichnet, dass** in einem Bereich, welcher sich zu beiden Seiten der Grenzfläche zwischen dem Anfang und dem Ende des Strangs (2) erstreckt, mit einem Stempel (38) Druck auf die Oberseite (25) des Strangs (2) ausgeübt wird.

6. Verfahren nach Anspruch 5, **dadurch gekennzeichnet, dass** die Oberseite (25) des Strangs (2) mittels des Stempels (38) mit dem Druck beaufschlagt und der Stempel (38) von der Oberseite (25) des Strangs (2) wieder abgehoben werden, bevor mit dem ersten Backen (35) und dem zweiten Backen (36) auf die beiden Seitenflächen (23,24) des Strangs (2) eingewirkt wird.

7. Verfahren nach einem der vorstehenden Ansprüche, **dadurch gekennzeichnet, dass** die Oberflächen, mit welchen die Backen (35,36) und gegebenenfalls der Stempel () auf den Strang (2) einwirken, abgerundete Ränder haben.

8. Verfahren nach einem der vorstehenden Ansprüche, **dadurch gekennzeichnet, dass** der erste Backen (35) mit einem so geringen Druck auf die erste Seitenfläche (23) des Strangs (2) einwirkt, dass er auf der später den Innenraum der Isolierglasscheibe begrenzenden ersten Seitenfläche (23) des Strangs (2) keine Delle hinterlässt, welche mit bloßem Auge sichtbar wäre.

9. Verfahren nach einem der vorstehenden Ansprüche, **dadurch gekennzeichnet, dass** für den pastösen und sich nachher verfestigenden Strang (2) ein Material auf der Grundlage eines Polyisobutylens verwendet wird.

10. Verfahren nach einem der vorstehenden Ansprüche, **dadurch gekennzeichnet, dass** wenigstens die Oberfläche des ersten Backens (35), mittels welcher die erste Seitenfläche (23) des Strangs (2) mit Druck beaufschlagt wird, eine Kontur hat, welche der vorgegebenen Kontur der ersten Seitenfläche (23) des Strangs (2) angeglichen ist.

11. Verfahren nach Anspruch 10, **dadurch gekennzeichnet, dass** auch die Kontur der an den Strang (2) anzulegenden Oberflächen des zweiten Backens (36) und gegebenenfalls des Stempels (38) der vorgegebenen Kontur der zweiten Seitenfläche (24) des Strangs (2) beziehungsweise der vorgegebenen Kontur der Oberseite (25) des Strangs (2) angeglichen sind.

12. Verfahren nach einem der vorstehenden Ansprüche, **dadurch gekennzeichnet, dass** die beiden Backen (35,36) zunächst so angeordnet werden, dass - bezogen auf die Längserstreckung des Strangs (2) - die Mitte ihrer Oberflächen, mit welchen sie an die Seitenflächen (23,24) des Strangs (2) angelegt werden sollen, in der Mitte des Bereichs liegt, über welchen sich die Grenzfläche zwischen dem Anfang und dem Ende des Stranges (2) erstreckt, und dass die Backen (35, 36) ein erstes Mal in dieser Anordnung mit Druck auf die beiden Seitenflächen (23,24) des Strangs (2) einwirken,
dass danach die Backen (35,36) vom Strang (2) abgehoben und ein stückweit entlang des Strangs (2) in die eine Richtung versetzt werden und in der durch das Versetzen erreichten Anordnung erneut mit Druck auf die Seitenflächen (23,24) einwirken,
dass danach die Backen (35,36) entlang des Strangs (2) in die entgegengesetzte Richtung ein stückweit über die Mitte des Bereichs hinaus, über welchen sich die Grenzfläche zwischen dem Anfang und dem Ende des Stranges (2) erstreckt, versetzt werden und in der durch das zweite Versetzen erreichten Anordnung ein weiteres Mal auf die Seitenflächen (23,24) des Strangs (2) einwirken, wobei der Versatz jedes Mal so gewählt ist, dass sich die Oberflächenbereiche des Strangs (2), auf welche die versetzten Backen (35, 36) einwirken, mit dem mittleren Bereich, in welchem zuerst auf die Seitenflächen (23,24) des Strangs (2) eingewirkt wurde, überlappen.

13. Verfahren nach Anspruch 12, **dadurch gekennzeichnet, dass** das Einwirken auf die Seitenflächen (23,24) des Strangs (2) mit gegenüber der Mittellage versetzten Backen (35,36) noch wenigstens ein weiteres Mal wiederholt wird, wobei die Größe des Versatzes dann gleich dem vorhergehenden oder verschieden von dem vorhergehenden Versatz sein kann.

14. Verfahren nach einem der vorstehenden Ansprüche, **dadurch gekennzeichnet, dass** zunächst der zweite Backen (36) zur Anlage an der zweiten Seitenfläche (24) des Strangs (2) gebracht wird, um die Soll-Lage des Strangs (2) zu sichern, und dass danach der erste Backen (35) gegen die erste Seitenfläche (24) des Strangs (2) bewegt wird, um bei feststehendem zweitem Backen (36) Druck auf den Strang (2) auszuüben.

15. Verfahren nach einem der vorstehenden Ansprüche, **dadurch gekennzeichnet, dass** der erste Backen (36) so bewegt wird, dass er die Glasstafel (4) nicht berührt.

## Claims

1. A method for forming a closed frame-shaped spacer for an insulating glass pane
by application of an initially pasty and subsequently solidifying strand (2)
which is delimited by a lower side (26), an upper side (25), a first side face (23) and a second side face (24), and which has a nominal thickness (D) between the lower side (26) and the upper side (25) as well as a nominal width (B) between the two side faces (23, 24),
onto a glass plate (4) along the edge of the glass plate (4) in a manner such that at a start of the strand (2), its thickness comprises a ramp (16) over a section with length (L), wherein the thickness of the strand (2) increases from zero to the nominal thickness (D), and at an end of the strand (2), said thickness decreases from the nominal thickness (D) to zero in a manner which is complementary to the increasing ramp (16) over the same section (L), overlapping the ramp (16), so that the surface of the ramp (16) forms an interface between the start and the end of the strand (2),
and post-treatment of the pasty strand (2), wherein at both of its side faces (23, 24), pressure is applied between a first jaw (35) and a second jaw (36) in a region which extends to either side of the edge (22) of the interface between the start and the end of the strand (2), wherein at least the surface of the first jaw (35) exerting pressure on the first side face (23) of the strand which delimits the interior space of the insulating glass pane after assembly thereof has a property enabling the material of the strand (2) which comes into contact with the surface of the first jaw (35) to be removed therefrom by lifting the first jaw (35) from the strand (2).

2. The method as claimed in claim 1, **characterized in that** the surfaces of the jaws (35, 36) facing the strand (2) consist of polytetrafluoroethylene (PTFE), perfluoroalkoxyalkane (PFA), fluoroethylenepropylene (FEP), a polysiloxane or a polyether-ether ketone (PEEK).

3. The method as claimed in claim 1 or claim 2, **characterized in that** the surfaces of the jaws (35, 36) which come into contact with the strand (2) have a mean roughness Ra in accordance with DIN EN ISO 4287:2010 of 0.5 µm to 2 µm, in particular from 1 µm to 1.5 µm.

4. The method as claimed in any of the preceding claims, **characterized in that** the pressure with which the jaws (35, 36) act upon the strand (2) and the duration of the action are coordinated with each other in a manner such that at least the first jaw (35) can be removed from the strand (2) without leaving a residue.

5. The method as claimed in any of the preceding claims, **characterized in that** in a region which extends to either side of the interface between the start and the end of the strand (2), pressure is exerted by means of a die (38) on the upper side (25) of the strand (2).

6. The method as claimed in claim 5, **characterized in that** a pressure is applied to the upper side (25) of the strand (2) by means of the die (38) and the die (38) is lifted again from the upper side (25) of the strand (2) before being acted upon by the first jaw (35) and the second jaw (36) on both side faces (23, 24) of the strand (2).

7. The method as claimed in any of the preceding claims, **characterized in that** the surfaces with which the jaws (35, 36) and optionally the die () act on the strand (2) have rounded edges.

8. The method as claimed in any of the preceding claims, **characterized in that** the first jaw (35) acts with such a low pressure on the first side face (23) of the strand (2) that it does not leave any indentations which could be visible to the naked eye on the first side face (23) of the strand (2) which will subsequently delimit the interior space of the insulating glass pane.

9. The method as claimed in any of the preceding claims, **characterized in that** a material based on a polyisobutylene is used as the pasty and subsequently solidifying strand (2).

10. The method as claimed in any of the preceding claims, **characterized in that** at least the surface of the first jaw (35) by means of which pressure is applied to the first side face (23) of the strand (2) has a contour which matches the given contour of the first side face (23) of the strand (2).

11. The method as claimed in claim 10, **characterized in that** the contour of the surfaces of the second jaw (36) and optionally the die (38) to be applied to the strand (2) also match the given contour of the second side face (24) of the strand (2) or respectively the given contour of the upper side (25) of the strand (2).

12. The method as claimed in any of the preceding claims, **characterized in that** the two jaws (35, 36) are initially disposed such that - with respect to the longitudinal extent of the strand (2) - the centre of their surfaces which are to be placed on the side faces (23, 24) of the strand (2) lies in the centre of the region over which the interface between the start and the end of the strand (2) extends,
and **in that** the jaws (35, 36) act a first time in this position with pressure on the two side faces (23, 24) of the strand,
**in that** afterwards, the jaws (35, 36) are lifted from the strand (2) and displaced a little further along the strand (2) in one direction, and in the position obtained by the displacement, pressure is again applied to the side faces (23, 24),
**in that** subsequently, the jaws (35, 36) are displaced in the opposite direction a little further along the strand (2) over and past the centre of the region over which the interface between the start and the end of the strand (2) extends, and in the position attained by the second displacement, act again on the side faces (23, 24) of the strand (2), wherein the offset is selected each time in a manner such that the surface regions of the strand (2) on which the displaced jaws (35, 36) act overlap with the central region of the strand (2) in which its side faces (23, 24) were first acted upon.

13. The method as claimed in claim 12, **characterized in that** the action on the side faces (23, 24) of the strand (2) with jaws (35, 36) which are offset with respect to the central position is repeated at least one more time, wherein the magnitude of the offset may be identical to the preceding offset or differ from the preceding offset.

14. The method as claimed in any of the preceding claims, **characterized in that** initially, the second jaw (36) is set against the second side face (24) of the strand (2), in order to provide a nominal position for the strand (2), and **in that** subsequently, the first jaw (35) is moved against the first side face (24) of the strand (2) in order to exert pressure on the strand (2) with the second jaw (38) being stationary.

15. The method as claimed in any of the preceding claims, **characterized in that** the first jaw (36) is moved in a manner such that it does not come into contact with the glass plate (4).

## Revendications

1. Procédé, destiné à créer un écarteur fermé en forme de cadre pour une vitre en verre isolant par
application d'un cordon (2) pâteux et se solidifiant par la suite, lequel est délimité par une face inférieure (26), une face supérieure (25), une première face latérale (23) et une deuxième face latérale (24) et lequel a une épaisseur de consigne (D) entre la face inférieure (26) et la face supérieure (25), ainsi qu'une largeur de consigne (B) entre les deux faces latérales (23, 24),
sur un vitrage (4), le long du bord du vitrage (4) de sorte, que sur un début du cordon (2) dont l'épaisseur comporte sur un trajet de longueur (L) une rampe (16), dans laquelle l'épaisseur du cordon (2) croît de zéro à l'épaisseur de consigne (D), et sur une fin du cordon (2) dont l'épaisseur est complémentaire à la rampe (16) croissante sur le même trajet (L), la rampe (16) décroisse, en chevauchement, de l'épaisseur de consigne (D) à zéro, de telle sorte que la surface de la rampe (16) forme une surface limite entre le début et la fin du cordon (2),
et post-traitement du cordon (2) pâteux, en soumettant celui-ci sur ses deux faces latérales (23, 24), dans une zone qui s'étend vers les deux côtés du bord (22) de la surface limite entre le début et la fin du cordon (2) entre une première mâchoire (35) et une deuxième mâchoire (36) par celles-ci uniquement à une pression, au moins la surface de la première mâchoire (35) exerçant la pression sur la première face latérale (23) du cordon (2), qui après l'assemblage de la vitre en verre isolant délimite l'espace intérieur de celle-ci ayant une propriété sur la base de laquelle la matière du cordon (2), laquelle entre en contact avec la surface de la première mâchoire (35) se laisse à nouveau désolidariser de celle-ci par relèvement de la première mâchoire (35) du cordon (2).

2. Procédé selon la revendication 1, **caractérisé en ce que** les surfaces de la mâchoire (35, 36) qui sont dirigées vers le cordon (2) sont constituées d'un fluoropolymère, comme par exemple un polytétrafluoréthylène (PTFE), un perfluoroalcoxylalcanone (PFA), un fluoroéthylène propylène (FEP), d'un polysiloxane ou d'un polyétheréthercétone (PEEK).

3. Procédé selon la revendication 1 ou 2, **caractérisé en ce que** les surfaces de la mâchoire (35, 36) qui entrent en contact avec le cordon (2) ont une rugosité moyenne Ra selon la norme DIN EN ISO 4287 : 2010 de 0,5 µm à 2 µm, notamment de 1 µm à 1,5 µm.

4. Procédé selon l'une quelconque des revendications précédentes, **caractérisé en ce que** la pression, avec laquelle les mâchoires (35, 36) agissent sur le cordon (2) et la durée de l'action sont adaptées l'une à l'autre de telle sorte qu'au moins la première mâchoire (35) se laisser désolidariser du cordon (2) sans résidu.

5. Procédé selon l'une quelconque des revendications précédentes, **caractérisé en ce que** dans une zone, laquelle s'étend vers les deux côtés de la surface limite entre le début et la fin du cordon (2), avec un poinçon (38), de la pression est exercée sur la face supérieure (25) du cordon (2).

6. Procédé selon la revendication 5, **caractérisé en ce que** la face supérieure (25) du cordon (2) est soumise à la pression au moyen du poinçon (38) et **en ce que** le poinçon (38) est à nouveau relevé de la face supérieure (25) du cordon (2) avant qu'à l'aide de la première mâchoire (35) et de la deuxième mâchoire (36), il soit agi sur les deux faces latérales (23, 24) du cordon (2).

7. Procédé selon l'une quelconque des revendications précédentes, **caractérisé en ce que** les surfaces, par lesquelles les mâchoires (35, 36) et le cas échéant le poinçon () agissent sur le cordon (2) ont des bords arrondis.

8. Procédé selon l'une quelconque des revendications précédentes, **caractérisé en ce que** la première mâchoire (35) agit sur première face latérale (23) du cordon (2) avec une pression si faible, de sorte à ne laisser sur la première face latérale (23) du cordon (2) qui délimite ultérieurement l'espace intérieur de la vitre en verre isolant aucune bosse qui serait visible à l'œil nu.

9. Procédé selon l'une quelconque des revendications précédentes, **caractérisé en ce qu'**on utilise pour le cordon (2) pâteux et se solidifiant ultérieurement une matière sur la base d'un polyisobutylène.

10. Procédé selon l'une quelconque des revendications précédentes, **caractérisé en ce qu'**au moins la surface de la première mâchoire (35), au moyen de laquelle la première face latérale (23) du cordon (2) est soumise à une pression a un contour, lequel est ajusté au contour prédéfini de la première face latérale (23) du cordon (2).

11. Procédé selon la revendication 10, **caractérisé en ce qu'**également le contour des surfaces de la deuxième mâchoire (36) et le cas échéant du poinçon (38) qui doivent être appliquées sur le cordon (2) est ajusté au contour prédéfini de la deuxième face latérale (24) du cordon (2), respectivement au contour prédéfini de la face supérieure (25) du cordon (2).

12. Procédé selon l'une quelconque des revendications précédentes, **caractérisé en ce qu'**on place d'abord les deux mâchoires (35, 36) de telle sorte que - en rapport à l'extension longitudinale du cordon (2) - le centre de leurs surfaces, par lesquelles elles doivent être appliquées sur la face latérale (23, 24) du cordon (2) se situe au centre de la zone sur laquelle s'étend la surface limite entre le début et la fin du cordon (2),
et **en ce que** les mâchoires (35, 36) agissent une première fois dans cette configuration avec de la pression sur les deux faces latérales (23, 24) du cordon (2),
**en ce qu'**on relève ensuite les mâchoires (35, 36) du cordon (2) et on les déplace ensuite d'un peu le long du cordon (2) dans l'une direction et dans la configuration obtenue par le déplacement, elles agissent une nouvelle fois avec de la pression sur les faces latérales (23, 24),
**en ce qu'**on déplace ensuite les mâchoires (35, 36) un peu le long du cordon (2) dans la direction opposée au-delà du centre de la zone sur laquelle s'étend la surface limite entre le début et la fin du cordon (2) et dans la configuration obtenue par le deuxième déplacement, elles agissent une fois encore sur la face latérale (23, 24) du cordon (2), le décalage étant choisi chaque fois de telle sorte que les zones superficielles du cordon (2), sur laquelle agissent les mâchoires (35, 36) décalées se chevauchent avec la zone centrale dans laquelle il a été agi en premier lieu sur la face latérale (23, 24) du cordon (2).

13. Procédé selon la revendication 12, **caractérisé en ce qu'**on réitère au moins une fois encore l'action sur les faces latérales (23, 24) du cordon (2) avec des mâchoires (35, 36) décalées par rapport à la position centrale, la dimension du décalage pouvant alors être égale au décalage précédent ou différente du décalage précédent.

14. Procédé selon l'une quelconque des revendications précédentes, **caractérisé en ce qu'**on amène d'abord la deuxième mâchoire (36) en application sur la deuxième face latérale (24) du cordon (2) pour bloquer la position de consigne du cordon (2) et **en ce qu'**on fait ensuite bouger la première mâchoire (35) contre la première face latérale (24) du cordon (2), pour exercer une pression sur le cordon (2), alors que la deuxième mâchoire (36) est immobilisée.

15. Procédé selon l'une quelconque des revendications précédentes, **caractérisé en ce qu'**on fait bouger la première mâchoire (36) de telle sorte qu'elle n'entre pas en contact avec le vitrage (4).
